# EUROPEAN PATENT APPLICATION

(11) **EP 1 726 360 A1**
(43) Date of publication of application: **29.11.2006**
(21) Application number: 05709246.2
(22) Date of filing: 19.01.2005
(51) Int. Cl.: B01J 23/76, B01J 32/00, B01J 37/03, C01B 3/40

(54) **REFORMING CATALYST COMPOSITION**

(30) Priority: 09.03.2004 JP 2004066365
(71) Applicant: Kyushu Electric Power Co., Inc., Fukuoka-ken 810-8720 (JP)
(72) Inventor: UCHIDA, Yoshitaka, KYUSHU ELECTRIC POWER CO., INC., Fukuoka-shi, Fukuoka 8108720 (JP); FUCHINO, Hiroshi, KYUSHU ELECTRIC POWER CO., INC., Fukuoka-shi, Fukuoka 8108720 (JP); TSUJIMOTO, Keigo, KYUSHU ELECTRIC POWER CO., INC., Fukuoka-shi, Fukuoka 8108720 (JP)
(74) Representative: Vossius & Partner
(86) International application number: PCT/JP2005/000616
(87) International publication number: WO 2005/084797

(57) **Abstract**

Disclosed is a reforming-catalyst composition, which allows highly concentrated hydrogen to be produced at a low S/C ratio in steam reforming of a hydrocarbon material equivalent to naphtha or kerosene, while maintaining catalytic activity over a long time-period. The reforming-catalyst composition comprises nickel oxide and lanthanum oxide as a catalytic material for inducing a reaction between steam and hydrocarbons equivalent to naphtha or kerosene to produce a hydrogen-containing gas. The nickel oxide and lanthanum oxide are partly or entirely formed as a perovskite-structured compound. The reforming-catalyst composition may further include an additional oxide, such as alumina, silica or zirconia, and the perovskite-structured compound may be formed on the additional oxide to provide a catalyst carrier. Further, the reforming-catalyst composition may include nickel or ruthenium supported by a catalyst carrier including the perovskite-structured compound.

## Description

### TECHNICAL FIELD

The present invention relates to a reforming-catalyst composition allowing hydrogen to be effectively produced in a hydrogen production process based on steam reforming of a hydrocarbon material equivalent to naphtha or kerosene; while maintaining catalytic activity over a long time-period. More specifically, the present invention relates to a technique of hydrogen production using a liquid hydrocarbon equivalent to naphtha or kerosene, and a steam-reforming-catalyst composition capable of inducing a reforming reaction with less carbon formation even at a low steam/hydrocarbon ratio, and withstanding a long continuous operation.

### BACKGROUND ART

In late years, new energy technologies have been actively developed in connection with environmental concerns. As one of the new energy technologies, there has been proposed a polymer electrolyte fuel cell (PEFC) having a low operating temperature of 100°C or less, and an excellent starting up/shutting down performance. In terms of fuels to be used therein, the polymer electrolyte fuel cell is classified into two types: a pure-hydrogen type incorporating no fuel-reforming unit, and a hydrocarbon (natural gas, LP gas, naphtha, kerosene, etc.) reforming type. Under the present circumstances having no hydrogen supply infrastructure, the hydrocarbon-reforming type capable of using existing fuel supply infrastructures for natural gas, LP gas, naphtha, kerosene, etc., is regarded as more realistic or viable in the immediate future.

A process for hydrogen production from hydrocarbon typically comprises steam reforming, CO (carbon monoxide) shift conversion, CO selective oxidation or CO absorption/separation. Among these steps, a hydrocarbon steam-reforming reaction is performed based on the following reaction formula (1):

Cn Hm + 2n H₂O → (m / 2+2n) H₂ + n CO₂ (1)

The reaction (1) is an endothermic reaction, and essentially performed at a high temperature of 500 to 900°C for the reason of thermal equilibrium etc. In the reaction (1), Ni/alurnina catalysts have been widely used since a long time ago (see, for example, the following Patent Publication 1). In view of the reforming process to be performed under a high temperature, it is critical to suppress deterioration of the reforming catalyst so as to provide improved life-duration or durability.

While factors of deterioration in the reforming catalyst have not been clarified up to now, it is generally believed that such deterioration is caused by sintering of nickel (a phenomenon that supported nickel particles are agglomerated and formed as large particles) and/or deposition of carbonaceous substances. As measures against this problem, it has been attempted to use noble metal, such as ruthenium (see, for example, the following Patent Publication 2), or to form the catalyst as a Ni-Mg-O-based solid solution (see, for example, the following Patent Publication 3), or to form the catalyst as a Ni/CaTiO₃ perovskite-structured oxide (see, for example, the following Patent Publication 4).

As another measure, the reaction is performed under the condition of a relatively high steam/carbon mol ratio (hereinafter referred to shortly as "S/C ratio"), to prevent the precipitation of carbon. In view of energy saving, it is desired to allow a reformer to be operated at a lower S/C ratio over a long time-period, and to provide a catalyst having enhanced durability even under this condition. However, it is difficult for conventional catalysts to satisfy such a need sufficiently.
[Patent Publication 1] Japanese Patent Laid-Open Publication No. 04-363140
[Patent Publication 2] Japanese Patent Laid-Open Publication No. 10-52639
[Patent Publication 3] Japanese Patent Laid-Open Publication No. 09-77501
[Patent Publication 4] Japanese Patent Laid-Open Publication No. 10-194703

### DISCLOSURE OF INVENTION

It is an object of the present invention to provide a reforming-catalyst composition allowing highly concentrated hydrogen to be produced at a low S/C ratio in steam reforming of a hydrocarbon material equivalent to naphtha or kerosene, while maintaining catalytic activity over a long time-period.

In order to achieve this object, the present invention provides a reforming-catalyst composition comprising nickel oxide and lanthanum oxide which serve as a catalytic material for inducing a reaction between steam and a hydrocarbon material equivalent to naphtha or kerosene to produce a hydrogen-containing gas. The nickel oxide and lanthanum oxide are partly or entirely formed as a perovskite-structured compound.

The reforming-catalyst composition of the present invention may further include an additional oxide, such as alumina, silica or zirconia, and the perovskite-structured compound may be formed on the additional oxide to provide a catalyst carrier. Further, the reforming-catalyst composition of the present invention may include nickel or ruthenium supported by a catalyst carrier including the perovskite-structured compound.

The reforming-catalyst composition of the present invention allows highly concentrated hydrogen to be stably produced at a relatively low S/C ratio for a long time-period. This makes it passable to effectively produce hydrogen in a hydrogen production process based on steam reforming of a liquid hydrocarbon, such as naphtha or kerosene.

### BEST MODE FOR CARRYING OUT THE INVENTION

For example, a coprecipitation process may be used for obtaining an intended perovskite-structured or perovskite-type compound in the present invention. In this case, the perovskite-type compound is typically prepared in the following manner. An inorganic salt compound, such as a nitrate salt of Ni or La, is dissolved in water to form a complete metallic salt solution. Additionally, either one of carbonate, hydrogen carbonate, oxalate and hydroxide of sodium or potassium, preferably sodium carbonate, is dissolved in water of 60°C under stirring to form a precipitant solution. Then, the metallic salt solution is dripped into the precipitant solution at 60°C under stirring to form a precipitate. The obtained precipitate is filtered, and repeatedly rinsed with water. Then, the precipitate is dried at a temperature of 80°C or more for 16 hours. Subsequently, the dried precipitate is burnt in a muffle furnace at 800°C for 2 hours to obtain a LaNiO₃ perovskite-type oxide compound serving as a catalyst carrier.

In the present invention, the perovskite-type compound may be formed on an oxide, such as alumina, silica, titania or zirconia. Specifically, a sol or hydroxide of either one of these oxides is mixed with the above precipitant solution, and then the metallic salt solution is dripped into the mixture to form a precipitate. Subsequently, the same process as described above is performed to obtain a LaNiO₃ perovskite-type compound serving as a catalyst carrier.

In the present invention, any suitable conventional process, such as an impregnation process, may be used for allowing nickel or ruthenium to be supported on the above carrier.

The nickel to be used may include a metallic salt, such as nickel chloride, nickel nitrate, nickel sulfate or nickel oxalate. Among them, nickel nitrate is particularly preferable in that it is less likely to leave negative ions on a catalytic material after thermal decomposition. An amount of nickel to be supported is set in the range of 0.1 to 10 mass%. If the amount of nickel is less than 0.1 mass%, an effect of improving catalytic activity cannot be sufficiently obtained. If the amount of nickel exceeds 10 mass%, the catalytic activity will not be improved in proportion to increase in the amount, and carbon will be increasingly precipitated. In view of these factors, the amount of nickel is optimally set in the range of 1 to 10 mass%.

Similarly, the ruthenium to be used may include a metallic salt, such as ruthenium chloride or ruthenium nitrate. Among them, ruthenium chloride hydrate is particularly preferable in view of solubility and easiness in handling. While an amount of ruthenium to be supported may be in the range of 0.5 to 5 mass%, it is optimally set in the range of 0.5 to 3 mass% for the same reasons as those in nickel.

A conventional impregnation process may be used for allowing the nickel to be supported on the perovskite-type carrier, for example, in the following manner. The aforementioned LaNiO₃ compound carrier is impregnated with an aqueous solution containing a given amount of nickel nitrate, and then dried to vaporize water in the solution. The dried compound with nickel nitrate is burnt in a muffle furnace at 500°C for 2 hours to obtain a catalyst. The ruthenium may be supported on the perovskite-type carrier in the same manner.

The obtained catalyst powder is molded using a compression-molding machine. Then, the obtained molded product is cut to have a size of about 2 to 3 mm, and used in a steam-reforming reaction.

While a S/C ratio in the steam-reforming reaction is set in the range of 1.5 to 4 (for cyclohexane) or at 4.0 (for naphtha) in the after-mentioned specific examples, it is selectively determined in the range of 2 to 5, which is considered as a preferable range allowing the catalyst to be economically used. In the steam-reforming reaction, an inert gas, such as nitrogen gas, may coexist as a diluent. These reaction gases are supplied to a reactor packed with the catalyst to induce a catalytic reaction typically at a temperature of 300 to 900°C, preferably 400 to 700°C. A reaction pressure is set typically in the range of normal pressures to 3 MPa, preferably in the range of normal pressures to 1 MPa. A liquid hourly space velocity (LHSV) of a reaction liquid is set in the range of 1 to 10 h⁻¹, preferably in the range of 2 to 5 h⁻¹. The catalyst according to the present invention may be used in the reactor form of any of a fixed bed, moving bed and fluidized bed. While the present invention will be more specifically described in connection with the following examples, it should be understood that the present invention is not limited to such examples.

### [EXAMPLE 1]

### (Inventive Example)

19.08 g of sodium carbonate was dissolved in 225 ml of water, and 6.82 g of alumina sol (Alumina Sol 520: 30% Al₂O₃; manufactured by Nissan Chemical Industries, Ltd.) was added into the solution. The obtained solution is heated up to 60°C under stirring. Then, an aqueous solution prepared by dissolving 21.65 g of lanthanum nitrate hexahydrate and 14.54 g of nickel nitrate hexahydrate in 182 ml of water was added to the above solution containing sodium carbonate, bit by bit, to form a precipitate, and the mixture was continuously stirred at 60°C for 1 hour. The obtained precipitate was filtered, and repeatedly rinsed with hot water. After the filtrate has a pH of 8 or less, the precipitate was dried at 80°C for 16 hours. Then, the dried precipitate was burnt at 800°C for 2 hours to obtain a catalyst carrier having a LaNiO₃ perovskite structure.

3.00 g of the obtained carrier powder was put in an aqueous solution prepared by dissolving 0.299 g of nickel nitrate hexahydrate in 9 ml of water, and water in the mixture was vaporized. Then, the carrier with nickel nitrate hexahydrate was dried at 80°C for 12 hours or more, and burnt at 500°C for 2 hours to obtain a 2% Ni-supporting LaNiO₃-Al₂O₃ catalyst.

### (Comparative Example)

30.00g of alumina powder (powder of NK 124: manufactured by Sumitomo Chemical Co., Ltd.) and 0.96 g of light magnesium oxide (manufactured by Kishida Chemical Co., Ltd.) were sufficiently mixed together, and the obtained mixture was burnt in an air atmosphere at 800°C for 3 hours to obtain a catalytic carrier. The carrier was impregnated with a solution prepared by dissolving 0.256 g of ruthenium trichloride (content of Ru: 40%) in 30 ml of pure water, and water in the solution was vaporized. Then, the impregnated carrier was dried at 60°C for 15 hours. The obtained dried substance was put in 45 ml of aqueous solution containing 0.034 g of sodium tetrahydroborate (manufactured by Kishida Chemical Co., Ltd.) dissolved therein, so as to be subjected to a reduction treatment. After draining excess solution, the treated substance was dried at 60°C for 15 hours to obtain a 0.5% Ru/Al₂O₃-MgO catalyst.

Cyclohexane was selected as a typical hydrocarbon material, and subjected to a steam-reforming reaction. Specifically, 10ml of the catalyst molded to have a size of 2 to 3 mm was packed in a stainless reaction tube having an inner diameter of 22 φ, and reduced in a hydrogen stream at 700°C for 2 hours. Then, a reaction test was performed under the following conditions.

### (Reaction Conditions)

| | |
|---|---|
| Reaction Temperature | : 300°C, 400°C |
| Hydrocarbon Material | : cyclohexane |
| LHSV | : 4 h⁻¹ |
| S/C | : 1.5, 2.5, 4.0 |
| Pressure | : 0.1 MPa |

A hydrogen concentration in a reaction product gas is shown in Table 1.

**Table 1**

| | Catalyst | Temperature (°C) | S/C | Hydrogen Concentration in Reaction Product (%) |
|---|---|---|---|---|
| Inventive Example 1 | 2% Ni/LaNiO₃-Al₂O₃ | 300 | 1.5 | 40.9 |
| | | | 2.5 | 44.2 |
| | | | 4.0 | 44.1 |
| | | 400 | 1.5 | 37.8 |
| | | | 2.5 | 44.2 |
| | | | 4.0 | 44.7 |
| Comparative Example 1 | 0.5% Ru/Al₂O₃-MgO | 300 | 1.5 | 29.9 |
| | | | 2.5 | 32.2 |
| | | | 4.0 | 43.9 |
| | | 400 | 1.5 | 36.3 |
| | | | 2.5 | 42.5 |
| | | | 4.0 | 44.2 |

As seen in Table 1, it was verified that the reforming-catalyst composition of Inventive Example 1 can provide a high concentration of hydrogen as compared with Comparative Example 1.

### [EXAMPLE 2]

A catalytic activity in steam reforming of naphtha was evaluated using 10 ml of each catalyst in the above Inventive Example 1 and Comparative Example 1, under the following conditions.

### (Reaction Conditions)

| | |
|---|---|
| Temperature of Reduction Treatment : | 700°C |
| Reaction Temperature | : 400°C, 500°C, 600°C, |
| Naphtha | : 0.04 mass % of sulfur |
| | 90.6 volume% of paraffinic hydrocarbon |
| | 0.3 volume% of olefinic hydrocarbon |
| | 7.2 volume% of naphthenic hydrocarbon |
| | 1.9 volume% of aromatic hydrocarbon |
| LHSV | : 4 h⁻¹ |
| S/C | : 4.0 |
| Pressure | : 0.1 MPa |

A hydrogen concentration in a reaction product gas is shown in Table 2.

**Table 2**

| | Catalyst | Temperature (°C) | Hydrogen Concentration in Reaction Product (%) |
|---|---|---|---|
| Inventive Example 1 | 2% Ni/LaNiO₃-Al₂O₃ | 400 | 45.4 |
| | | 500 | 46.4 |
| | | 700 | 46.8 |
| Comparative Example 1 | 0.5% Ru/Al₂O₃-MgO | 400 | 32.8 |
| | | 500 | 37.4 |
| | | 700 | 37.4 |

As seen in Table 2, it was verified that the reforming-catalyst composition of Inventive Example 1 can provide a high concentration of hydrogen in the steam reforming of naphtha, as compared with Comparative Example 1.

### INDUSTRIAL APPLICABILITY

The reforming-catalyst composition of the present invention allows highly concentrated hydrogen to be stably produced at a relatively low S/C ratio for a long time-period. This makes it passable to effectively produce hydrogen in a hydrogen production process based on steam reforming of a liquid hydrocarbon, such as naphtha or kerosene.

## Claims

1. A reforming-catalyst composition comprising nickel oxide and lanthanum oxide which serve as a catalytic material for inducing a reaction between steam and a hydrocarbon material equivalent to naphtha or kerosene to produce a hydrogen-containing gas, said nickel oxide and lanthanum oxide being partly or entirely formed as a perovskite-structured compound.

2. The reforming-catalyst composition as defined in claim 1, which further includes an additional oxide of alumina, silica or zirconia wherein said perovskite-structured compound is formed on said additional oxide to provide a catalyst carrier.

3. The reforming-catalyst composition as defined in claim 1, which includes nickel supported by a catalyst carrier including said perovskite-structured compound.

4. The reforming-catalyst composition as defined in claim 1, which includes ruthenium supported by a catalyst carrier including said perovskite-structured compound.
